(19) Europäisches Patentamt
European Patent Office
Office européen des brevets

(11) **EP 3 134 960 B1**

(12) **EUROPÄISCHE PATENTSCHRIFT**

(45) Veröffentlichungstag und Bekanntmachung des Hinweises auf die Patenterteilung:
**02.06.2021 Patentblatt 2021/22**

(51) Int Cl.:
*H02K 3/12* *(2006.01)*      *H02K 3/47* *(2006.01)*
*H02K 13/08* *(2006.01)*

(21) Anmeldenummer: **15717883.1**

(22) Anmeldetag: **21.04.2015**

(86) Internationale Anmeldenummer:
**PCT/EP2015/058610**

(87) Internationale Veröffentlichungsnummer:
**WO 2015/162135 (29.10.2015 Gazette 2015/43)**

(54) **ELEKTRISCHE MASCHINE**

ELECTRIC MACHINE

MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2014 DE 102014105642**

(43) Veröffentlichungstag der Anmeldung:
**01.03.2017 Patentblatt 2017/09**

(73) Patentinhaber: **MOLABO GmbH**
**85521 Ottobrunn (DE)**

(72) Erfinder: **DAJAKU, Gurakuq**
**85579 Neubiberg (DE)**

(74) Vertreter: **Epping - Hermann - Fischer Patentanwaltsgesellschaft mbH Schloßschmidstraße 5 80639 München (DE)**

(56) Entgegenhaltungen:
WO-A1-02/084843          DE-A1- 4 312 217
DE-A1-102005 032 965     DE-B- 1 204 314
JP-A- 2007 151 295       US-A1- 2003 205 986

**Beschreibung**

Die vorliegende Erfindung betrifft eine elektrische Maschine mit einem Stator und einem beweglich dazu gelagerten Rotor.

Elektrische Maschinen können motorisch oder generatorisch betrieben werden. Der Stator weist elektrische Wicklungen auf, welche an ein Stromsystem angeschlossen werden, das häufig mehrphasig ist.

Für Anwendungen mit mehr als zwei Spulen pro Pol pro Phase werden häufig verteilte Wicklungen eingesetzt.

Obwohl diese verteilten Wicklungen zahlreiche Nachteile aufweisen, beispielsweise einander überlappende Spulen mit dem damit verbundenen höheren Herstellungsaufwand und höheren Materialkosten, werden sie bis heute von vielen Herstellern in elektrischen Maschinen eingesetzt. Der Hauptvorteil der verteilten Wicklung liegt darin, dass die magnetomotorische Kraft im Luftspalt zwischen Stator und Rotor der Maschine wenig Oberwellenanteil, das heißt einen geringen Anteil unerwünschter Harmonischer der magnetomotorischen Kraft aufweist. Dadurch ergibt sich eine hohe Leistungsfähigkeit der Maschine, welche geringe Rotorverluste, geringes Geräuschniveau, wenig Vibrationsprobleme und so weiter einschließt.

Ein weiterer Nachteil der verteilten Wicklung ist der aufwendige Wicklungskopf. Es werden lange Drähte zur Verbindung der in den Nuten des Stators eingelegten Leiterabschnitte im Wicklungskopf der Maschine benötigt, da jeweils Distanzen über eine Vielzahl von Zähnen des Stators hinweg überbrückt werden müssen.

Es besteht daher Bedarf nach einer elektrischen Maschine, welche bei guten elektrischen Eigenschaften wie beispielsweise geringem Geräuschniveau mit geringem Aufwand hergestellt werden kann.

Die Aufgabe wird durch den Gegenstand des Patentanspruchs 1 gelöst. Vorteilhafte Ausgestaltungen und Weiterbildungen sind in den Unteransprüchen angegeben.

Nach dem vorgeschlagenen Prinzip ist ein Stator vorgesehen, der eine Vielzahl von Nuten zur Aufnahme einer oder mehrerer Statorwicklungen umfasst. In die Nuten ist je ein Leiterabschnitt der Statorwicklung eingelegt, wobei die Leiterabschnitte an einem Ende, das heißt auf einer Seite des Stators miteinander elektrisch verbunden sind, so dass sie miteinander einen Kurzschluss bilden. Auf der im Falle einer elektrischen Radialfluss-Maschine in axialer Richtung gegenüberliegenden Seite des Stators sind die jeweils freien Enden der Leiterabschnitte mit je einem Anschluss einer Stromversorgungseinheit verbunden. Somit können die Leiterabschnitte über die Stromversorgungseinheit einzeln oder in Gruppen angesteuert werden, wie später näher erläutert.

Damit ist es möglich, jeden Leiterabschnitt mit einer individuellen Phase des elektrischen Signals der Stromversorgungseinheit zu beaufschlagen.

Das Kurzschließen der Leiterabschnitte auf einer Seite des Stators ist mit geringem Aufwand durchführbar. Hierfür ist ein Kurzschlussmittel vorgesehen, welches mit den Leiterabschnitten aus einem Stück hergestellt ist. Beispielsweise können das Kurzschlussmittel und die Leiterabschnitte einstückig aus Kupfer oder Aluminium oder Bronze hergestellt sein.

Das Kurzschlussmittel ist als Kurzschlussring ausgeführt. Der Kurzschlussring kann einen rechteckigen Querschnitt aufweisen.

Die vorgeschlagene Maschine verzichtet auf verteilte Wicklungen. Der Herstellungsaufwand ist gering, da in den Nuten jeweils ein Leiterabschnitt, der beispielsweise gerade sein kann, eingelegt werden kann.

Insgesamt verbindet die vorgeschlagene Maschine gute elektrische und mechanische Eigenschaften wie geringes Geräuschniveau, wenig Rotorverluste und geringe Vibrationen mit dem Vorteil einer besonders einfachen Fertigung, die auf verteilte Wicklungen verzichtet und damit kostengünstig ist. In einer Ausführung weist die Maschine mehrere Polpaare auf, wobei die auf der ersten Seite des Stators miteinander kurzgeschlossenen Leiterabschnitte einem ersten Polpaar zugeordnet sind. Weitere Leiterabschnitte sind einem weiteren Polpaar zugeordnet und auf einer zweiten Seite des Stators miteinander in einem weiteren Kurzschlussmittel kurzgeschlossen. Diese weiteren Leiterabschnitte sind auf der ersten Seite des Stators mit je einem Anschluss der Stromversorgungseinheit oder einer anderen Stromversorgungseinheit verbunden.

Das weitere Kurzschlussmittel und die damit kurzgeschlossenen Leiterabschnitte sind bevorzugt einstückig hergestellt.

Die Stromversorgungseinheit ist jeweils derart ausgelegt und mit den Leiterabschnitten verbunden, dass die Leiterabschnitte entweder einzeln mit je einer individuellen elektrischen Phase versorgt werden oder jeweilige Gruppen benachbarter Leiterabschnitte gebildet sind. Die Leiterabschnitte je einer Gruppe sind gemeinsam mit der gleichen elektrischen Phase angesteuert, wobei jede Gruppe einzeln mit einer individuellen Phase angesteuert wird.

Die elektrische Maschine weist bevorzugt mehrere Phasen auf, die von der Stromversorsorgungseinheit bereitgestellt werden.

Die Anzahl der Phaser beträgt mindestens vier.

In einer Ausführungsform beträgt die Anzahl der Phasen mindestens fünf.

In einer Ausführungsform beträgt die Anzahl der Phasen mindestens zehn.

Da die Stromversorgungseinheit die Leiterabschnitte in den Nuten individuell mit einem Phasenstrom beaufschlagt, ist das vorgeschlagene Prinzip besonders gut für eine Vielzahl von Phasen geeignet.

In einer Ausführungsform sind die in den Nuten eingelegten Leiterabschnitte gerade ausgeführt. Hierdurch ist sowohl die Fertigung der Nut, als auch die Fertigung des Leiterabschnitts nochmals vereinfacht.

Die jeweils in die Nuten eingelegten Leiterabschnitte können beispielsweise Aluminium-Stäbe, Kupfer-Stäbe oder Stäbe aus einem Leitermaterial mit schlechterer Leitfähigkeit als Aluminium beziehungsweise Kupfer sein, wie zum Beispiel Bronze.

Zum Kurzschließen der Leiterabschnitte auf der jeweils zum Kurzschließen vorgesehenen Seite des Stators ist ein Kurzschlussring vorgesehen Hierdurch ist eine besonders einfache und kostengünstige Realisierung der Kurzschlussverbindung der Leiterabschnitte auf einer Seite des Stators möglich.

In einer Ausführungsform ist die Stromversorgungseinheit dazu eingerichtet, die Polpaarzahl der Maschine im Betrieb zu verändern. Hierdurch kann die Maschine beispielsweise für unterschiedliche Betriebszustände optimiert werden. In diesem Fall kann die Polpaarzahl beispielsweise beim Anfahren der Maschine anders sein als bei höherer Drehzahl.

Die Stromversorgungseinheit ist in einer Ausführungsform dazu eingerichtet, zumindest einen Leiterabschnitt im Betrieb zu deaktivieren. Dies kann beispielsweise durch eine Unterbrechung der elektrischen Verbindung zwischen dem jeweiligen Anschluss der Stromversorgungseinheit und dem zugeordneten Leiterabschnitt erfolgen. Dies kann beispielsweise bei Teillastbetrieb erfolgen.

In einer Ausführungsform umfasst die Stromversorgungseinheit ein Kommutierungsmittel. Hierdurch werden bei Drehung des Rotors mehrere unterschiedliche elektrischen Phasen erzeugt. Diese unterschiedlichen elektrischen Phasen können zur Speisung der Leiterabschnitte des Stators verwendet werden.

Die jeweils in die Nuten eingelegten Leiterabschnitte können einstückig hergestellt sein. Alternativ können die Leiterabschnitte jeweils mehrere parallel geschaltete Teil-Leiterabschnitte umfassen.

Hierdurch können der Proximity-Effekt und/oder der Skin-Effekt reduziert werden.

Um die Streuinduktivität der Nuten zu erhöhen, können zwischen den Teil-Leiterabschnitten Eisenbrücken eingefügt sein.

Die Stromversorgungseinheit umfasst in einer Ausführungsform eine oder mehrere Gleichspannungsquellen, die über elektronische Schalter mit den Leiterabschnitten schaltbar verbunden sind. Beispielsweise kann für jeden Leiterabschnitt eine eigene Gleichspannungsquelle vorgesehen sein. Diese mehreren Gleichspannungsquellen können von gleicher oder von unterschiedlicher Art sein.

Untersuchungen haben ergeben, dass die vorgeschlagene Maschine zwar eine Stromversorgungseinheit mit einer größeren Anzahl von Schaltelementen benötigt als eine herkömmliche Maschine mit verteilter Wicklung, dass dieser Zusatzaufwand jedoch mehr als ausgeglichen wird durch die Einsparungen, die sich durch das Vermeiden der verteilten Wicklungen und durch die geringere notwendige Sperrspannung der Schaltelemente ergeben. Insgesamt ist der Herstellungsaufwand deutlich geringer als bei einer herkömmlichen Maschine mit verteilter Wicklung.

Das Kurzschlussmittel und das ggf. vorhandene weitere Kurzschlussmittel weisen Kühlrippen auf. Die Kühlrippen verbessern die Wärmeabfuhr.

Die Kühlrippen können in axialer Richtung und/oder in radialer Richtung außen und/oder in radialer Richtung innen am Kurzschlussmittel angebracht sein.

Alternativ oder zusätzlich können die Kühlrippen in Umfangsrichtung und/oder in radialer Richtung und/oder in diametraler Richtung gekrümmt verlaufen.

Die Kühlrippen können gemeinsam mit dem Kurzschlussmittel und den daran angeordneten Leiterabschnitten einstückig hergestellt sein.

Die einstückige Herstellung kann ein Druckguss-, Guss- oder Strahschmelzverfahren umfassen. Letzteres ist auch unter der Bezeichnung 3D-Druck bekannt.

Die Erfindung wird nachfolgend an mehrere Ausführungsformen anhand von Zeichnungen näher erläutert.

Dabei zeigen:

Figur 1 ein Beispiel eines Stators nach dem vorgeschlagenen Prinzip für eine vierpolige elektrische Maschine,

Figur 2 einen beispielhaften Wicklungsaufbau für das Beispiel von Figur 1,

Figur 3 eine beispielhafte, achtzehnphasige Stromversorgungseinheit zum Ansteuern eines Polpaares der Statorwicklung des Ausführungsbeispiels von Figur 1,

Figur 4 an einem beispielhaften Diagramm die magnetomotorische Kraft aufgetragen über dem elektrischen Winkel der Maschine von Figur 1,

Figur 5 für das Beispiel von Figur 1 die Darstellung der Harmonischen der magnetomotorischen Kraft,

Figur 6 einen Vergleich der Harmonischen der magnetomotorischen Kraft zwischen der Ausführung gemäß der Figur 1 einerseits und einer konventionellen verteilten Wicklung andererseits,

Figur 7 ein Ausführungsbeispiel der Ansteuerung der Leiterabschnitte von Figur 1 mit einem Multiphaseninverter,

Figur 8 ein Ausführungsbeispiel eines Bipolarschalters zur Verwendung in der Schaltung von Figur 7,

Figur 9 ein alternatives Ausführungsbeispiel einer Stromversorungseinheit zur Ansteuerung der Leiterabschnitte,

Figur 10 ein Ausführungsbeispiel eines Unipolarschalters zur Verwendung in der Stromversorgungseinheit gemäß Figur 9,

Figur 11 eine weitere Ausführungsform der Stromversorgungseinheit mit mehreren Gleichspannungsquellen,

Figur 12 eine andere Ausführungsform der Stromversorgungseinheit mit mehreren Gleichspannungsquellen,

Figur 13 ein Ausführungsbeispiel der Stromversorgungseinheit mit rotierenden Bürsten,

Figur 14A ein Beispiel der Statorwicklung angepasst für eine Kommutierung,

Figur 14B einen beispielhaften rotierenden Kohlebürstenring zur Verwendung mit der Statorwicklung von Figur 14A,

Figur 15A ein weiteres Ausführungsbeispiel eines rotierenden Kohlebürstenringsystems,

Figur 15B eine zu der Ausführung von Figur 15A passende beispielhafte Wicklung,

Figur 15C ein Ausführungsbeispiel, bei dem die Komponenten von Figuren 15A und 15B kombiniert sind,

Figur 16 einen Vergleich der magnetomotorischen Kraft zwischen Gleichstrom- und Wechselstromversorgung, aufgetragen über dem Drehwinkel,

Figur 17 einen Vergleich der Harmonischen der magnetomotorischen Kraft zwischen Gleichstrom- und Wechselstromversorgung,

Figur 18A eine Beispiel des Stators mit eingelegter Statorwicklung in einer perspektivischen Ansicht einer ersten Seite des Stators,

Figur 18B eine zweite Seite des Stators von Figur 18A,

Figur 19A eine beispielhafte Ausführung der Statorwicklung,

Figur 19B einen beispielhaften, massiven Leiterabschnitt zur Verwendung in der Statorwicklung von Figur 19A,

Figur 19C einen beispielhaften, geblechten Leiterabschnitt zur Verwendung in der Statorwicklung von Figur 19A,

Figur 20A einen Ausschnitt des Stators mit Leiterabschnitten,

Figur 20B eine Ausführung des Stators mit parallel geschalteten Teil-Leiterabschnitten an einem beispielhaften Ausschnitt,

Figur 20C ein Ausführungsbeispiel eines Ausschnitts des Stators mit Eisenbrücken,

Figur 21 eine Ausführung der Statorwicklung nach dem vorgeschlagenen Prinzip mit 100 Phasen bei einer vierpoligen Maschine,

Figur 22A ein Beispiel einer Maschine ohne Nuten und ohne Zähne,

Figur 22B eine Ausschnittsvergrößerung von Figur 22A,

Figur 23 ein Ausführungsbeispiel des Rotors als Permanentmagnetrotor,

Figur 24 ein Ausführungsbeispiel des Rotors als Reluktanzrotor,

Figur 25 ein Ausführungsbeispiel des Rotors als stromerregter Rotor,

Figur 26 ein Ausführungsbeispiel des Rotors als Asynchronrotor,

Figur 27 ein Ausführungsbeispiel der Statorwicklung mit mehreren Polpaaren und gegenüberliegendem Kurzschlussring,

Figur 28 ein erstes Ausführungsbeispiel eines Kurzschlussrings mit Kühlrippen,

Figur 29 das Ausführungsbeispiel von Figur 28 mit Stator,

Figur 30 ein zweites Ausführungsbeispiel eines Kurzschlussrings mit Kühlrippen,

Figur 31 das Ausführungsbeispiel von Figur 30 mit Stator,

Figur 32 ein drittes Ausführungsbeispiel eines Kurzschlussrings mit Kühlrippen und

Figur 33 ein viertes Ausführungsbeispiel eines Kurzschlussrings mit Kühlrippen.

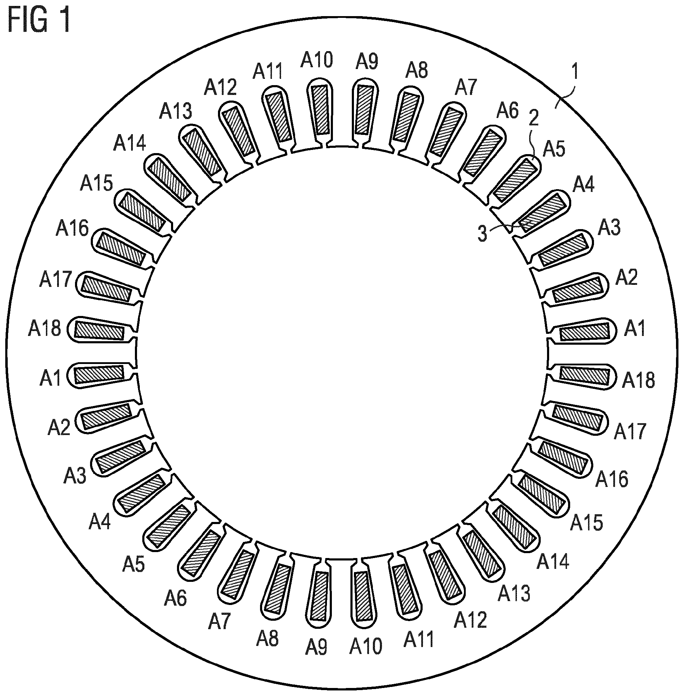

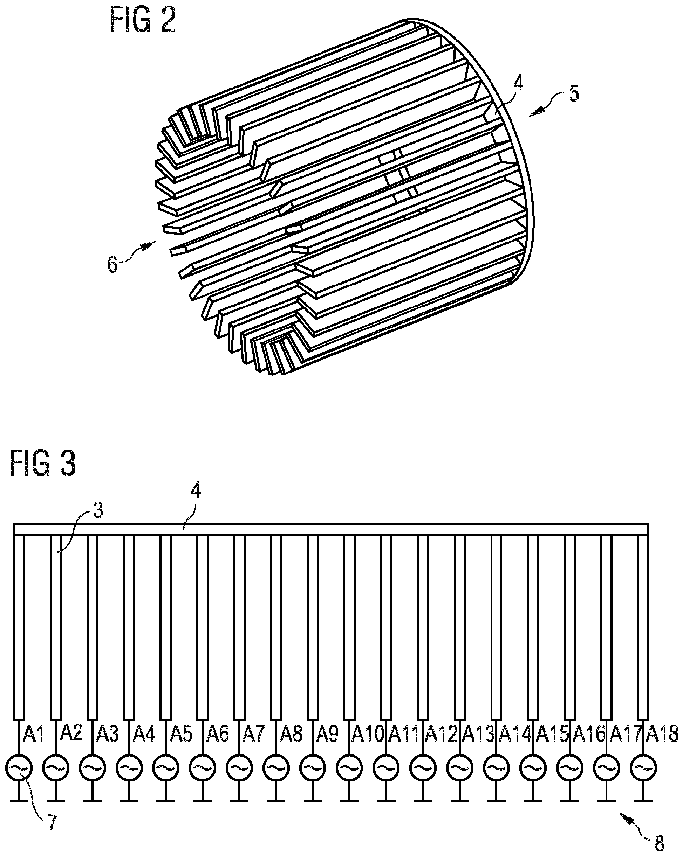

Figur 1 zeigt ein erstes Beispiel eines Stators 1 einer elektrischen Maschine, welche als rotierende Maschine mit Innenläufer ausgelegt ist, in einem Querschnitt. Der Rotor ist aus Gründen der Übersichtlichkeit in Figur 1 nicht eingezeichnet. Die Maschine weist auf der Innenseite des Stators entlang des Umfangs in axialer Richtung ausgedehnte Nuten 2 auf, die vorliegend im Querschnitt dargestellt sind. In die Nuten 2 ist jeweils ein Leiterabschnitt 3 einer Statorwicklung eingelegt, die später anhand von Figur 2 näher beschrieben wird. In jeder Nut 2 ist genau ein Leiterabschnitt 3 angeordnet. Die Wicklung weist achtzehn Phasen auf. Die Phasen der Wicklung sind mit A1, A2, ... , A18 bezeichnet. Die Maschine ist als vierpolige Maschine ausgelegt und weist daher die Polpaarzahl 2 auf. Jede Phase A1 bis A18 kommt daher zweimal vor, wobei die entsprechenden Leiterabschnitte um 180 Grad zueinander versetzt sind.

Der Strom eines Leiterabschnitts ik in jeder Phase kann gemäß folgender Formel beschrieben werden:

$$i_k = \hat{I} \cdot \cos\left( \omega t - p \cdot (k-1)\frac{2\pi}{m} \right),$$

mit Qs = p . m und k = 1, ... , Qs

Dabei ist k die Nummer des Leiterabschnittes, m die Gesamtzahl der Phasen, p die Anzahl der Polpaare und Qs ist die Gesamtzahl der Statornuten. Entsprechend ergibt sich die Phasenspannung zu:

$$u_k = \hat{U} \cdot \sin\left( \omega t - p \cdot (k-1)\frac{2\pi}{m} + \varphi_{u,k} \right)$$

Wie Figur 2 zeigt, sind alle Leiterabschnitte 3 mit einem Kurzschlussring 4 an einem Ende miteinander verbunden. Der Kurzschlussring 4 ist an einer ersten Seite des Stators 5 angeordnet. An einer gegenüberliegenden Seite 6 des Stators sind die freien Enden der Leiterabschnitte 3 mit je einem Anschluss einer Stromversorgungseinheit verbunden, dies ist jedoch in Figur 2 nicht eingezeichnet.

In Figur 3 ist oben am Bildrand der Kurzschlussring 4 eingezeichnet. Die Leiterabschnitte 3 sind an den freien Enden mit je einer Stromquelle 7 einer Stromversorgungseinheit 8 verbunden. Die Arbeitsweise der Stromversorgungseinheit wird später näher erläutert.

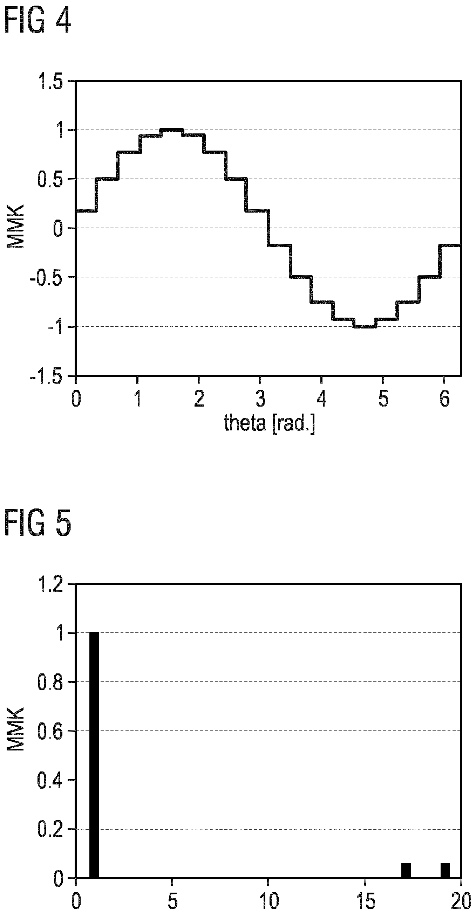

Figur 4 zeigt für die beispielhafte elektrische Maschine gemäß Figuren 1 bis 3 die Verteilung der magnetomotorischen Kraft MMK aufgetragen über dem elektrischen Winkel von 0 bis 2 Pi.

Wie anhand von Figur 5 deutlich wird, die die Harmonischen der magnetomotorischen Kraft der Maschine gemäß Figur 1 bis 3 zeigt, weist die magnetomotorische Kraft jenseits der als Arbeitswelle genutzten Grundwelle praktisch keine nennenswerten Harmonischen auf.

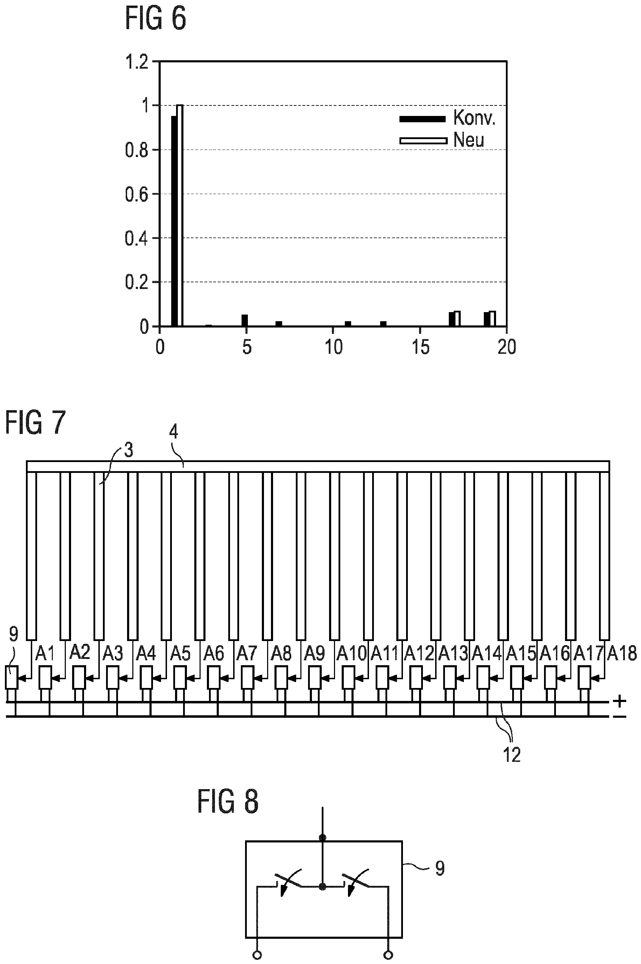

Figur 6 zeigt einen Vergleich der Harmonischen der magnetomotorischen Kraft zwischen der Ausführung gemäß der Figur 1 einerseits und einer konventionellen verteilten Wicklung andererseits. Man erkennt, dass die herkömmliche verteilte Wicklung sogar mehr unerwünschte Harmonische aufweist als die Maschine nach dem vorgeschlagenen Prinzip.

Die vorgeschlagene Maschine weist zudem eine höhere Leistungsdichte auf. Der Vergleich der Maschine ist dabei unter den gleichen Bedingungen durchgeführt, das bedeutet, dass die Anzahl der Statornuten und die Anzahl der Leiterabschnitte pro Nut für beide Maschinen gleich angenommen wird.

Der Wicklungsfaktor der Maschine von Figur 1 beträgt 1. Bei der herkömmlichen Maschine mit verteilter Wicklung beträgt er 0,96. Die Leistungsdichte der Maschine nach dem vorgeschlagenen Prinzip ist damit für das gezeigte Beispiel um 4% höher.

Anhand der nachfolgenden Figuren wird die Multiphasen-Versorgung der elektrischen Maschine in der Stromversorgungseinheit an mehreren Beispielen erläutert. Für alle nachfolgenden Ausführungsbeispiele gemäß Figuren 7 bis 12 gilt, dass moderne Halbleiterschalter wie MOSFETs oder IGBTs verwendet werden können. Diese elektronischen Schalter wandeln eine Gleichspannung in eine Wechselspannung.

In dem Beispiel gemäß Figur 7 ist jeder elektrischen Phase A1 bis A18 ein elektronischer Schalter 9 zugeordnet, der das freie Ende des jeweiligen Leiterabschnitts 3 wahlweise auf eine positive oder negative Gleichspannung +, - einer als Gleichspannungsbus 12 ausgeführten Gleichspannungsversorgung legt.

Figur 8 zeigt den beispielhaften Aufbau des Schalters 9 gemäß Figur 7. Dieser ist als bipolares elektronisches Leistungsschalterbauteil ausgeführt.

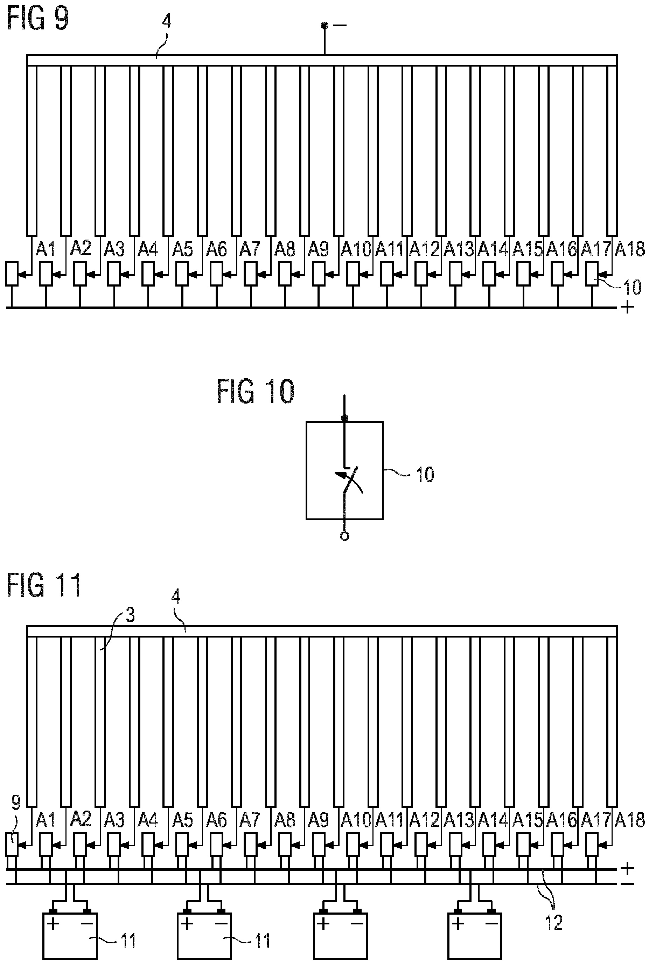

Alternativ kann anstelle des bipolaren Schalters 9 ein unipolarer Schalter 10 verwendet werden, wie er in Figur 10 beispielhaft gezeigt ist. Der unipolare Schalter 10 verbindet jeweils ein Ende eines Leiterabschnitts A1 bis A18 mit einer unipolaren Gleichspannung +. In diesem Fall ist der Kurzschlussring 4 mit dem negativen Pol - dieser Spannungsquelle verbunden. Die Anzahl der Leistungsschalter kann bei dieser Ausführung gemäß Figur 9 und 10 halbiert werden, was die Gesamtkosten signifikant reduziert.

Figur 11 zeigt eine Weiterbildung von Figur 7. Dabei sind mehrere DC-Spannungsquellen 11 vorgesehen, die jeweils mit dem Gleichspannungsbus 12 in einer Parallelschaltung verbunden sind.

Anstelle der mehreren Gleichspannungsquellen 11 kann alternativ lediglich eine einzige Gleichspannungsquelle verwendet werden.

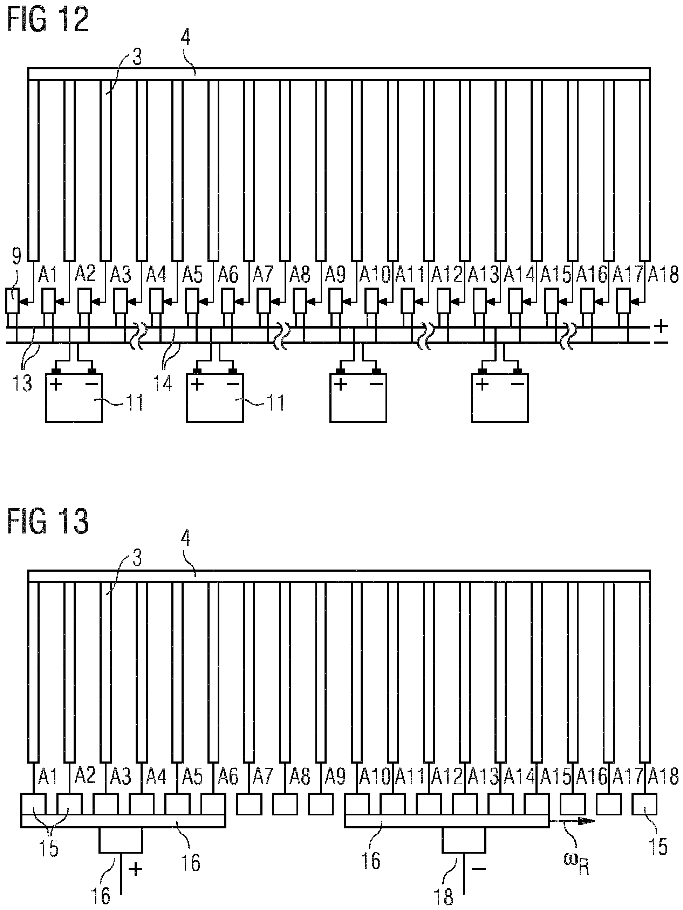

Figur 12 zeigt eine Abwandlung des Prinzips von Figur 11 an einem Beispiel, bei der nicht ein gemeinsamer DC-Bus 12 vorgesehen ist, sondern jeweils voneinander getrennte Gleichspannungsabschnitte 13, 14, welche jeweils mehrere Schalter für die Phasen A1 bis A4 beziehungsweise A5 bis A8 et cetera der Leiterabschnitte speisen. Dabei ist jedem Gleichspannungsabschnitt 13, 14 eine Gleichspannungsquelle 11 zugeordnet.

Figur 13 zeigt eine alternative Ausführung der Stromversorgungseinheit mit einem rotierenden Bürstensystem. Dieses Gleichspannungsversorgungssystem tritt anstelle der oben beschriebenen beispielhaften Wechselstromversorgungen von Figuren 7 bis 12 der Stromversorgungseinheit.

Die mit einer Gleichspannungsquelle ausgeführte Stromversorgungseinheit gemäß Figur 13 umfasst Wicklungskommutatoren 15, rotierenden Kohlebürsten 16 und Gleichspannungsversorgungskommutatoren 17, 18. Die Leiterabschnitte 3 sind auf der zweiten Seite des Stators mit je einem Wicklungskommutator 15 verbunden. Die Anzahl der Wicklungskommutatoren 15 ist in diesem Beispiel gleich der Anzahl der Leiterabschnitte 15 und damit der Statornuten.

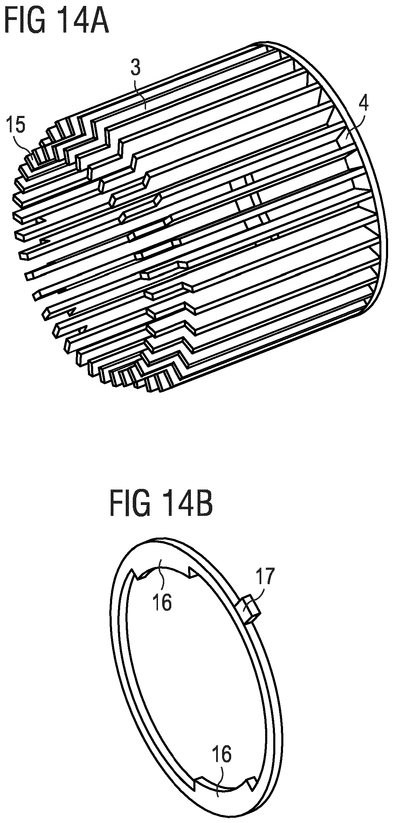

Wie Figur 14A zeigt, können die Enden der Leiterabschnitte 3 zugleich als Wicklungskommutatoren 15 dienen.

Die Anschlüsse +, - einer Gleichspannungsquelle 11, hier nicht eingezeichnet, sind mit den Gleichspannungsversorgungskommutatoren 17, 18 verbunden. Dabei ist der positive Gleichspannungsanschluss mit dem Kommutator 17 verbunden und der negative Gleichspannungsanschluss der gleichen Spannungsquelle mit dem Kommutator 18. Zwischen den Wicklungskommutatoren und den Gleichspannungsversorgungskommutatoren sind rotierende Kohlebürsten 16 angeordnet, die den Strom von der Gleichspannungsversorgungsquelle zu den Leiterabschnitten 3 führen. Die Kohlebürsten können von einer weiteren elektrischen Maschine angetrieben sein oder direkt an die Rotorwelle der elektrischen Maschine angeschlossen werden, so dass sie direkt vom eigenen Maschinenrotor bewegt werden. Die Rotationsgeschwindigkeit der Kohlebürsten ist abhängig von der gewünschten Rotationsgeschwindigkeit des Magnetfeldes der Maschine.

Wie in Figur 13 an einem Beispiel gezeigt, wird eine erste Gruppe von Leiterabschnitten mit der positiven Gleichspannung versorgt, während die gegenüberliegende Gruppe von Leiterabschnitten, die um 180° verschoben ist, mit negativer Gleichspannung versorgt wird. Weiterhin werden die Kohlebürsten 16 wie oben erläutert gedreht. Das Magnetfeld, welches in der Maschine erzeugt wird, rotiert mit der gleichen Geschwindigkeit des Bürstensystems. Mit anderen Worten wird in der Maschine ein rotierendes Magnetfeld erzeugt, obwohl die Maschine mit DC-Strömen versorgt wird.

Figur 14B zeigt die rotierenden Kohlebürstenringe 16 und einen entsprechenden Gleichspannungsversorgungskommutator 17 an einem Beispiel zur Verwendung mit der Statorwicklung gemäß Figur 14A, mit den als Wicklungskommutatoren 15 ausgebildeten freien Enden der Leiterabschnitte 3.

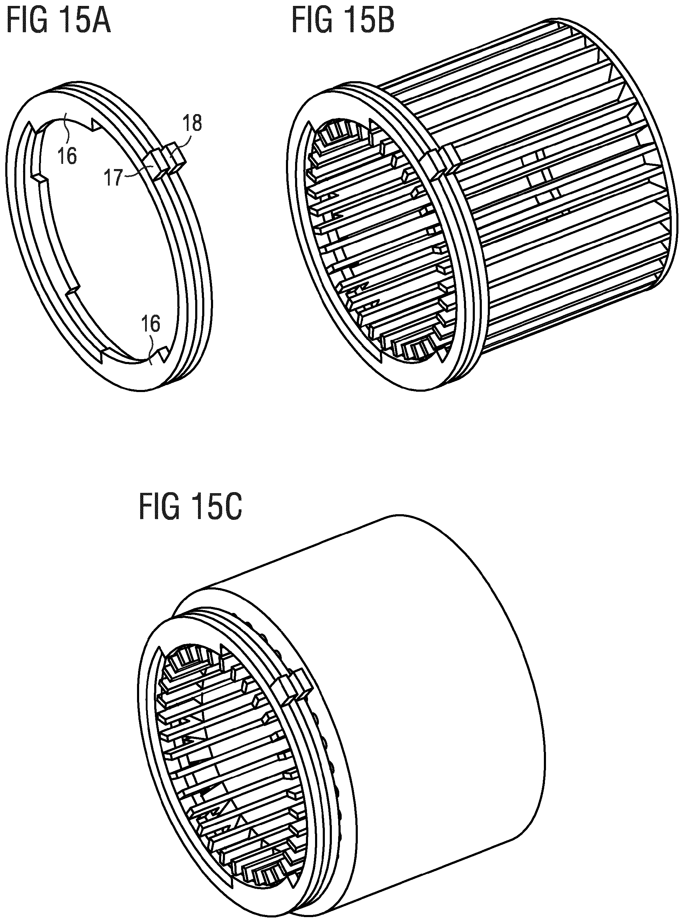

Figuren 15A bis 15C zeigen an einem weiteren Beispiel zwei rotierende Kohlebürstenringe 16 mit Gleichspannungsversorgungskommutatoren 17, 18 gemäß Figur 15A, die Anordnung der rotierenden Kohlebürstenringe an der Statorwicklung gemäß Figur 15B und den vollständigen Stator mit Wicklungssystem und Kohlebürstenringen gemäß Figur 15C.

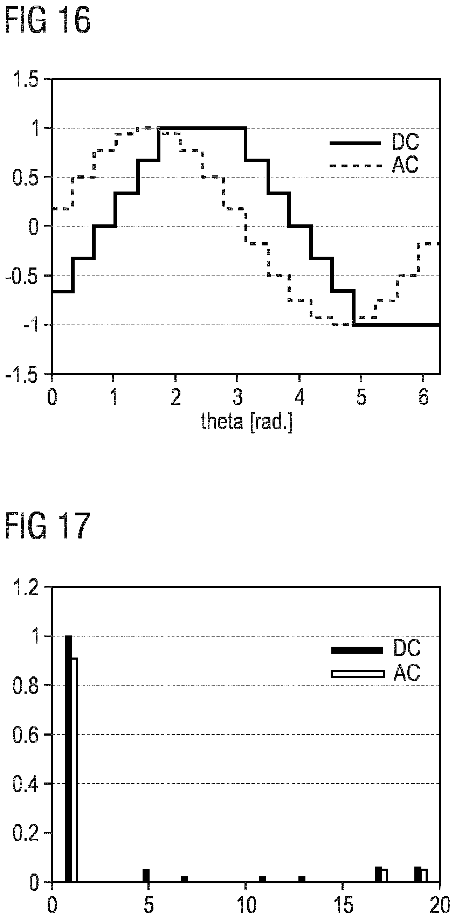

Figur 16 zeigt anhand eines Schaubilds einen Vergleich der magnetomotorischen Kraft aufgetragen über den elektrischen Winkel jeweils einmal mit einer durchgezogenen Linie für die Gleichspannungsversorgung und mit einer gestrichelten Linie für die Wechselspannungsversorgung.

Figur 17 zeigt anhand eines Schaubilds die Verteilung der Harmonischen der magnetomotorischen Kraft an einem Vergleich, mit schwarzen Balken für die Gleichspannungsversorgung und weißen Balken für die Wechselspannungsversorgung.

Als Wechselspannungsversorung ist dabei die Ausführung mit Leistungsschaltern gemäß Figuren 7 bis 12 verstanden, während unter Gleichspannungsversorung das Prinzip mit rotierenden Bürsten gemäß Figuren 13 bis 15C verstanden ist.

Man erkennt, dass die vorgeschlagene DC-Versorgung eine bessere Verteilung der Komponenten der magnetomotorischen Kraft aufweist und zudem eine etwas höhere Leistungsdichte als die AC-Versorgung. Der Vergleich ist jeweils bei gleichen elektrischen Bedingungen erfolgt.

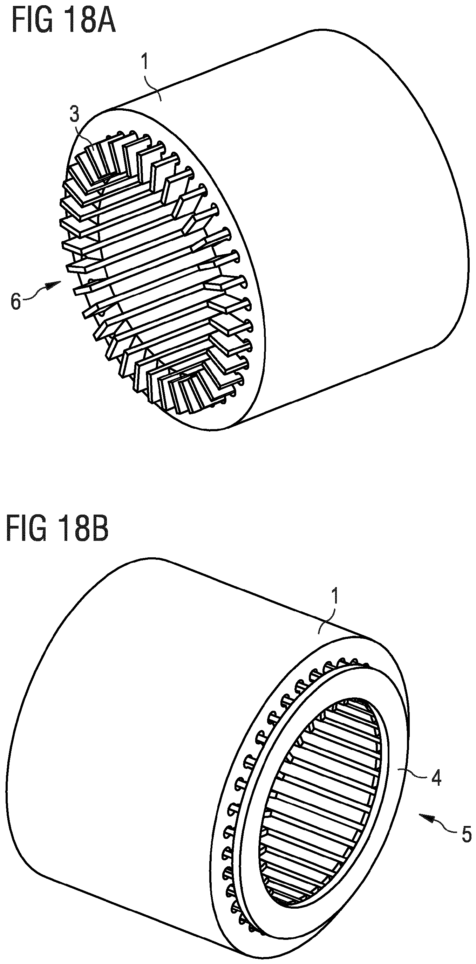

Figuren 18A und 18B zeigen jeweils perspektivische Ansichten eines Beispiels zum Verständnis der vorgeschlagenen elektrischen Maschine. Die Statorwicklung umfasst 36 Leiterabschnitte 3, die in jeweilige Nuten des Stators 1 eingelegt sind.

Auf der in Figur 18B dargestellten ersten Seite 5 des Stators ist ein Kurzschlussring 4 vorgesehen, welcher die 36 Leiterabschnitte 3 auf dieser Seite des Stators miteinander kurzschließt.

Figur 18A zeigt die freien Enden der Leiterabschnitte 3 auf der zweiten Seite 6 des Stators, welche mit einer hier nicht dargestellten Stromversorgungseinheit verbunden sind. Die Stromversorgungseinheit kann beispielsweise eine der oben erläuterten Gleichstrom- oder Wechselstromversorgungen umfassen.

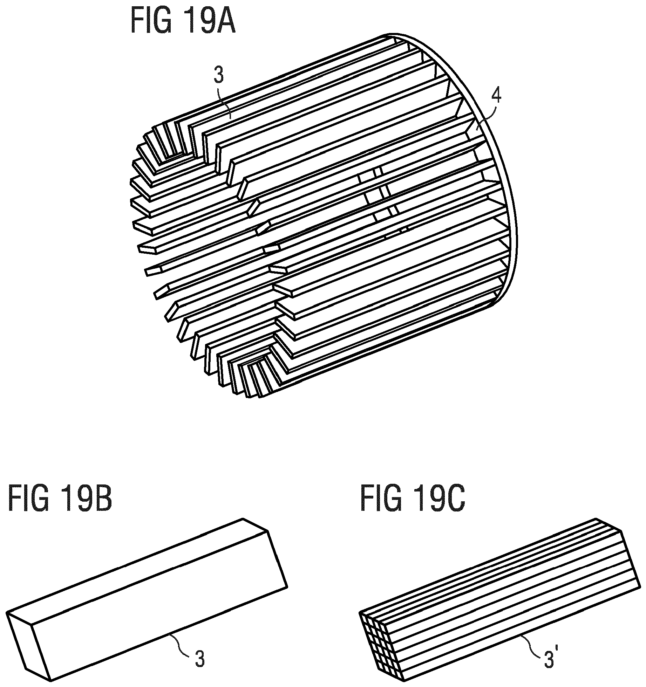

Figur 19A zeigt die Statorwicklung des Beispiels von Figuren 18A und 18B.

Wie in Figur 19B dargestellt ist jeder Leiterabschnitt 3 als massiver, quaderförmiger und gerader Leiterabschnitt ausgebildet, der hauptsächlich in axialer Richtung der Maschine ausgedehnt ist. Es ist sofort einsichtig, dass die Herstellung einer solchen Statorwicklung mit geringem Aufwand möglich ist.

Anstelle der Ausführung als massiver quaderförmiger Leiterabschnitt gemäß Figur 19B ist die Ausführung der Leiterabschnitte 3' als sogenannter Stranded Conductor möglich, womit mögliche Skin-Effekte und Proximity-Effekte deutlich reduziert werden können. Ein derartiger Leiterabschnitt 3', der als Stranded Conductor ausgebildet ist, ist in Figur 19C gezeigt. Derartig können alle oder eine Auswahl der Leiterabschnitte der Statorwicklung ausgeführt sein.

Anstelle der in Figuren 19B und 19C gezeigten quaderförmigen Ausgestaltung können die Leiterabschnitte abgerundete Ecken und/oder abgerundete Kanten aufweisen. Wenn in jeder Nut genau ein Leiterabschnitt eingelegt ist, ist der Nutfüllfaktor deutlich höher als bei üblichen verteilten Wicklungen. Damit geht ein geringer Phasenwiderstand einher. Somit kann problemlos Aluminiummaterial anstelle von Kupfer für die Leiterabschnitte verwendet werden. Hierdurch werden Gewicht und Kosten weiter reduziert.

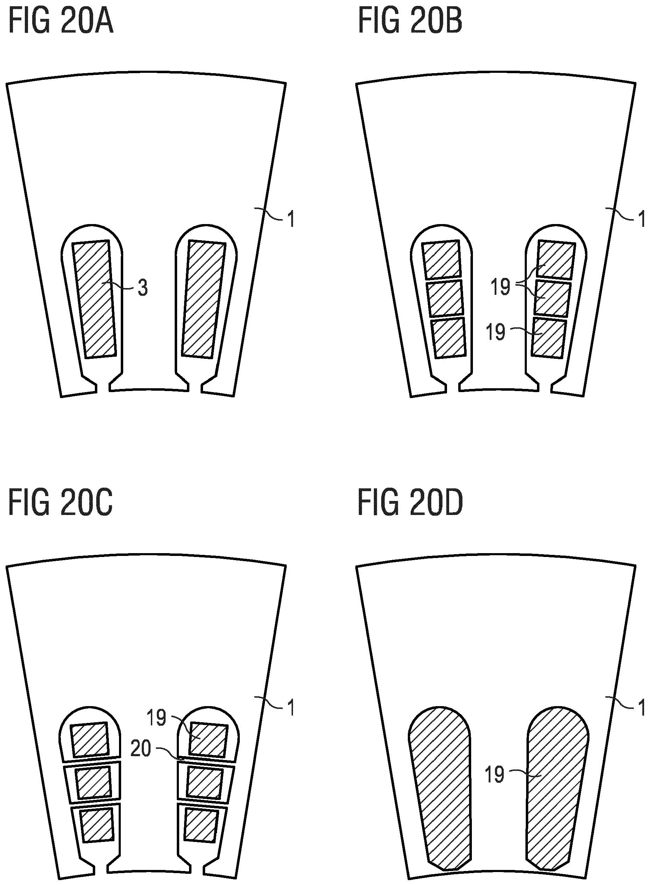

Figuren 20A bis 20D zeigen jeweils an einem sektorenartigen Ausschnitt des Stators 1 unterschiedliche Ausführungen der Leiterabschnitte 3.

In Figur 20A ist ein herkömmlicher quaderförmiger Leiterabschnitt gezeigt.

Figur 20B zeigt eine alternative Ausführungsform, bei der gegenüber Figur 20A anstelle eines einzelnen massiven quaderförmigen Leiters drei parallel geschaltete jeweils ebenfalls quaderförmige Teil-Leiterabschnitte vorgesehen sind, die beispielsweise wie in Figur 20B gezeigt jeweils einen annähernd quadratischen Querschnitt aufweisen können.

Die Summe der Querschnitte der Teil-Leiterabschnitte 19 von Figur 20B entspricht dem Querschnitt des Leiterabschnitts 3 von Figur 20A.

Durch diese Aufteilung ist ähnlich wie bei den Maßnahmen gemäß Figur 19C eine Reduzierung von Skin-Effekt und Proximity-Effekt erzielbar.

Wenn zwischen den Teil-Leiterabschnitten 19 Eisenbrücken 20 vorgesehen sind, so kann zusätzlich die Nutstreuinduktivität erhöht werden. Hierdurch wird die Induktivität der Phasenwicklung ebenfalls erhöht. Die Eisenbrücken 20 verbinden jeweils zwischen den parallelen Teil-Leiterabschnitten 19 benachbarte Statorzähne in Umfangsrichtung. Diese Ausführung ist in Figur 20C gezeigt.

Der Leiterabschnitt 3 kann in einer Ausführungsform die Nut komplett ausfüllen, wie in Figur 20D gezeigt. Hiermit kann der Nutfüllfaktor auf 100% gesteigert werden. Gemeinsam mit dem einseitigen Kurzschlussring kann diese Wicklung beispielsweise durch ein Druckguss-Verfahren hergestellt werden, was die Herstellungskosten der Maschine weiter verringert.

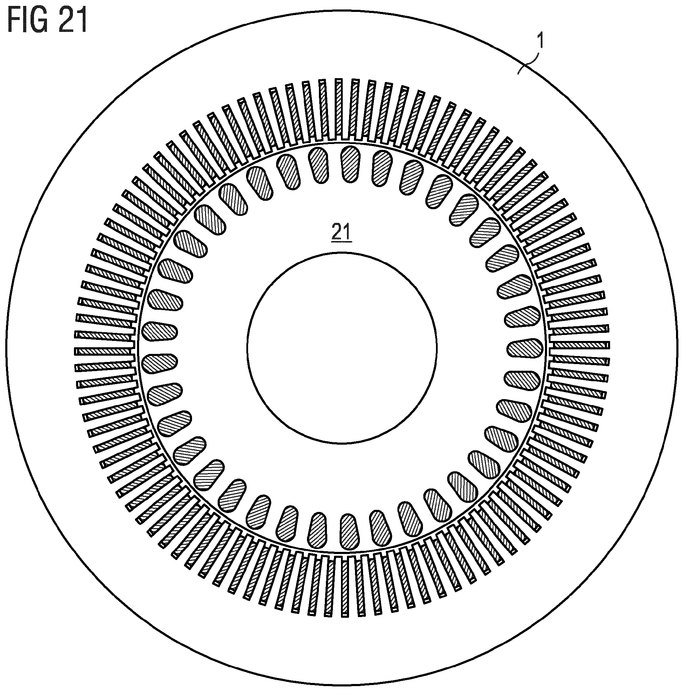

Figur 21 zeigt eine Ausführungsform der vorgeschlagenen elektrischen Maschine mit einem Stator 1, der zur Aufnahme einer Statorwicklung mit 100 Phasen und damit 100 Statornuten ausgelegt ist. Die Maschine ist als vierpolige elektrische Maschine ausgelegt. Je mehr Phasen beziehungsweise Statornuten die Maschine aufweist, umso besser nähert sich die magnetomotorische Kraft aufgetragen über den Umfangswinkel einer idealen Sinusform an.

Ein weiterer Vorteil einer sehr hohen Anzahl von Phasen ist, dass der Phasenstrom mit zunehmender Anzahl der Wicklungsphasen abnimmt. Wenn der Phasenstrom gering ist, können kostengünstige Standardleistungsschalterbauteile zur Realisierung einer Wechselspannungsversorgung verwendet werden.

Ein weiterer Vorteil einer sehr hohen Anzahl von Phasen ist, dass die Phaseninduktivität ebenfalls zunimmt. Der vorgeschlagene Aufbau der Statorwicklung weist eine Windungszahl von 1 pro Phase auf. Dies ergibt eine geringe Selbstinduktivität. Da die Phaseninduktivität der Summe aus der Selbstinduktivität und der Gegeninduktivität entspricht, kann gemäß der nachfolgenden Gleichung die Phaseninduktivität durch Erhöhen der Gegeninduktivität erhöht werden.

$$L_{Phase} = L_A \cdot \left( 1 + \sum_{k=1}^{m-1} cos^2\left( k\frac{2\pi}{m} \right) \right)$$

$L_A$ ist die Amplitude der Selbstinduktivität.

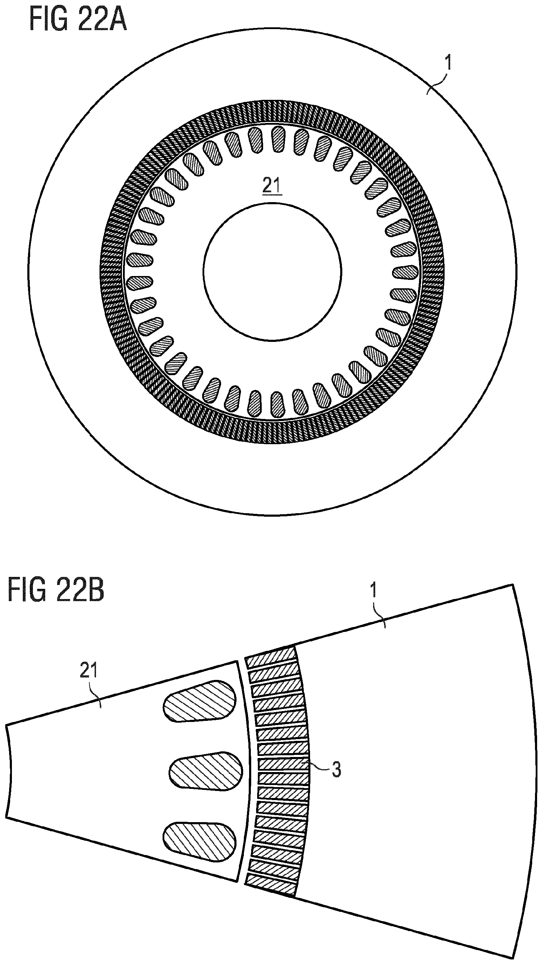

Figur 22A zeigt ein weiteres Beispiel, nicht Teil der beanspruchten Erfindung, der vorgeschlagenen elektrischen Maschine, bei der ausgehend von Figur 21 die Anzahl der Phasen soweit erhöht wurde, so dass überhaupt keine Zähne zwischen den Leiterabschnitten 3 mehr übrig bleiben. Es sind somit weder Statorzähne noch Nuten vorgesehen. Mit anderen Worten ist die Statorwicklung bei dieser Maschine im Luftspalt zwischen Stator und Rotor vorgesehen.

Dies wird anhand der Ausschnittsvergrößerung eines beispielhaften Sektors gemäß Figur 22B deutlich sichtbar. Da das Wicklungs- und Befestigungsmaterial der Leiterabschnitte am Stator nicht magnetisch ist, ist der effektive Luftspalt derartiger Maschinen ohne Zähne und Nuten sehr groß. Auf der anderen Seite ist durch die nochmalige Erhöhung der Anzahl der Statorphasen der Querschnitt der einzelnen Leiterabschnitte reduziert, was zu einer weiteren Reduzierung des Skin-Effekts und Proximity-Effekts führt. Zudem sind durch die nochmalige Erhöhung der Anzahl der Phasen ein praktisch sinusförmiger Verlauf der magnetomotorischen Kraft über den Umfangswinkel einerseits und weiter verringerter Phasenströme andererseits erzielbar. Hierdurch ergeben sich geringe ohmsche Maschinenverluste, eine sehr einfache Konstruktion der Maschine und aufgrund der geringen Ströme eine kleine Leistungselektronik. Der Aufbau der Maschine ohne Nuten und ohne Zähne ist deswegen so einfach, weil der Stator 1 lediglich zylinderförmig ist und im Inneren eine Statorwicklung aufweist, die einer Käfigwicklung entspricht, bei der jedoch nur auf einer Seite ein Kurzschlussring vorgesehen ist.

Die vorgeschlagene elektrische Maschine ist für eine Vielzahl unterschiedlicher elektrischer Maschinentypen anwendbar.

Diese umfassen Radialflussmaschinen und Axialflussmaschinen.

All diese Maschinen können als Synchronmaschinen oder Asynchronmaschinen arbeiten. Die Radialflussmaschine kann mit Innenläufer oder Außenläufer aufgebaut sein. Zudem können alle der oben genannten Maschinentypen mit unterschiedlichen Rotortopologien kombiniert werden.

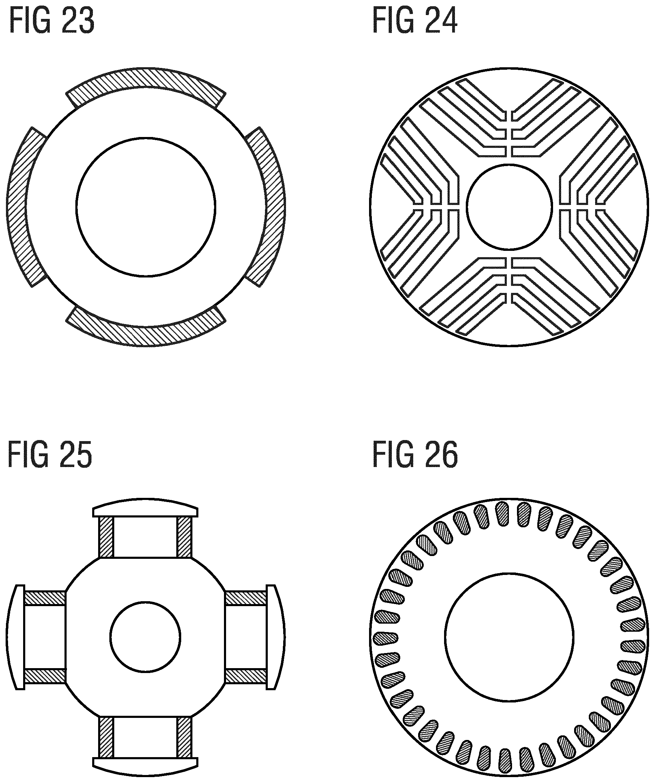

Figuren 23 bis 26 zeigen beispielhafte Rotoren, die nach dem vorgeschlagenen Prinzip einsetzbar sind. So zeigt Figur 23 einen Permanentmagnetrotor, Figur 24 einen Reluktanzrotor, Figur 25 einen stromerregten Rotor und Figur 26 einen Asynchronrotor.

Da es sich um an sich bekannte Rotoren von elektrischen Maschinen handelt, werden diese an dieser Stelle nicht näher erläutert.

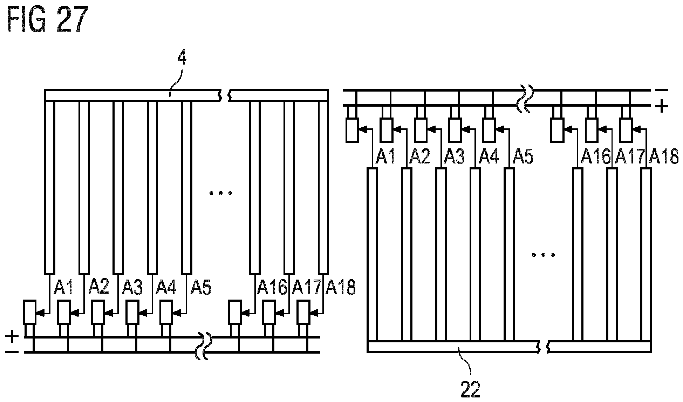

Figur 27 zeigt eine alternative Ausführungsform der Statorwicklung nach dem vorgeschlagenen Prinzip. In allen vorangegangenen Beispielen ist lediglich ein Kurzschlussring 4 auf der ersten Seite des Stators vorgesehen. Bei Multiphasenmaschinen mit einer Polpaarzahl größer als 1 ist es jedoch alternativ möglich, zwei Gruppen von Leiterabschnitten zu definieren, von denen die Leiterabschnitte einer ersten Gruppe auf einer ersten Seite 5 des Stators miteinander kurzgeschlossen sind und die Leiterabschnitte einer zweiten Gruppe auf einer gegenüberliegenden zweiten Seite 6 des Stators miteinander kurzgeschlossen sind. Hierfür können jeweils entsprechende Kurzschlussringe 4, 22 vorgesehen sein.

In der linken Bildhälfte von Figur 27 sind die Leiterabschnitte A1 bis A18 mit dem Kurzschlussring 4 auf der ersten Seite 5 des Stators miteinander kurzgeschlossen. Diese Leiterabschnitte sind einem ersten Polpaar zugeordnet. Die Leiterabschnitte eines zweiten Polpaars, die in der rechten Bildhälfte der Figur 27 dargestellt sind, sind hingegen auf der gegenüberliegenden zweiten Seite 6 des Stators über einen Kurzschlussring 22 miteinander verbunden. Für beide Gruppen von Leiterabschnitten gilt, dass diese an der jeweils freien Seite an eine Stromversorgungseinheit angeschlossen sind. Diese kann beispielsweise wie in Figur 7 und 8 gezeigt bipolare Schaltmittel aufweisen, die das jeweils freie Ende des entsprechenden Leiterabschnitts auf eine positive oder negative Gleichspannung legen.

Für alle gezeigten Beispiele der Figuren 1 bis 27 gilt, dass es eine Vielzahl möglicher Betriebsmodi gibt. So kann beispielsweise bei der Asynchronmaschine sogar im Betrieb die Anzahl der Polpaare verändert werden.

Die Anzahl der aktiven Phasen kann ebenfalls verändert werden, sogar im Betrieb.

Die aktiven Schaltphasen können symmetrisch oder unsymmetrisch entlang des Maschinenumfangs verteilt sein. Abhängig vom Arbeitspunkt kann die Betriebsart der Maschine verändert werden, um einen verbesserten Wirkungsgrad zu erzielen.

Ebenso ist es beispielsweise möglich, je nach Anforderung die Betriebsparameter anzupassen abhängig davon, ob möglichst hohe Performance oder möglichst lange Lebensdauer der Maschine gewünscht ist.

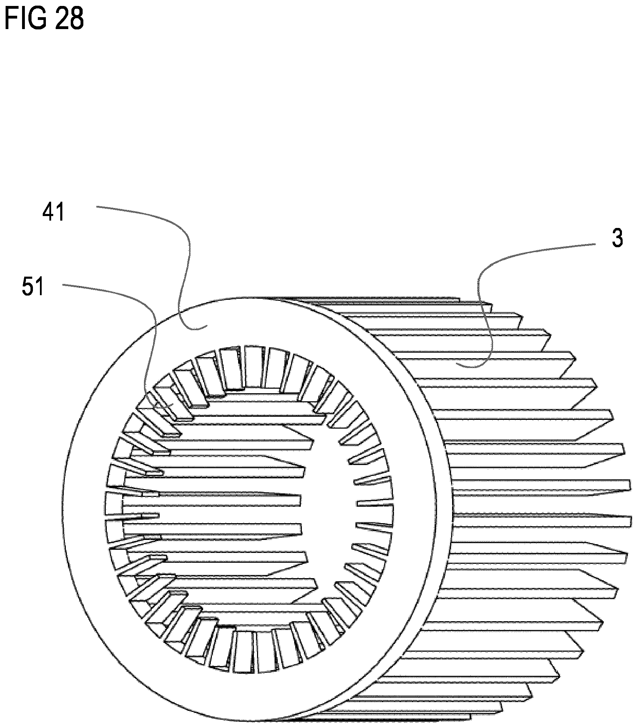

Figur 28 zeigt ein erstes Ausführungsbeispiel eines Kurzschlussrings 41 mit Kühlrippen 51. Ausgehend von dem Kurzschlussring von Figur 2 mit den sich daran anschließenden Leiterabschnitten 3 ist der Kurzschlussring 41 an seinem Innenradius mit radial nach innen verlaufenden Kühlrippen 51 versehen. Die Kühlrippen 51 schließen in axialer Richtung in diesem Beispiel jeweils bündig mit dem Kurzschlussring 41 ab.

Die Kühlrippen haben hier eine flache, quaderförmige Geometrie und sind voneinander in Umfangsrichtung beabstandet.

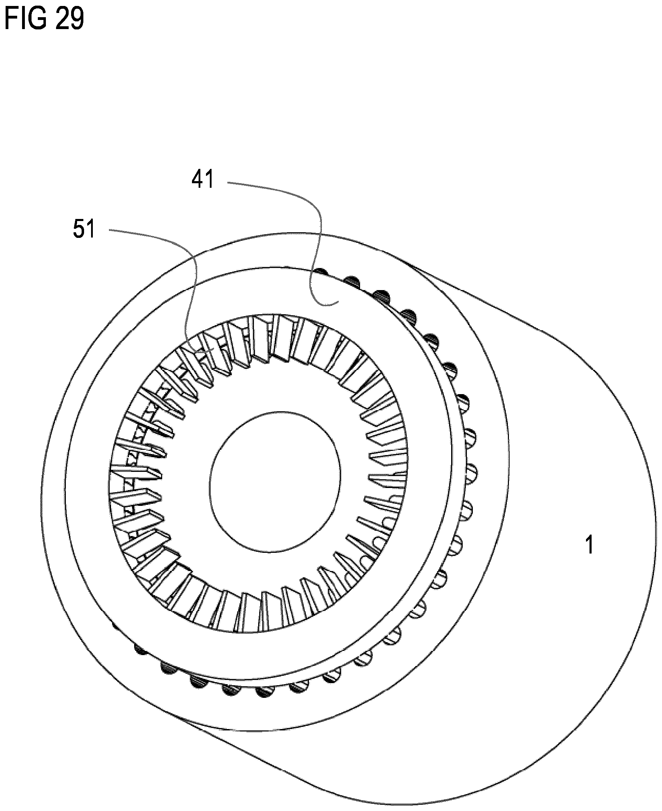

Figur 29 zeigt das Ausführungsbeispiel von Figur 28 mit Stator 1. Die Leiterabschnitte 3 sind in jeweilige Nuten des Stators 1 eingebracht.

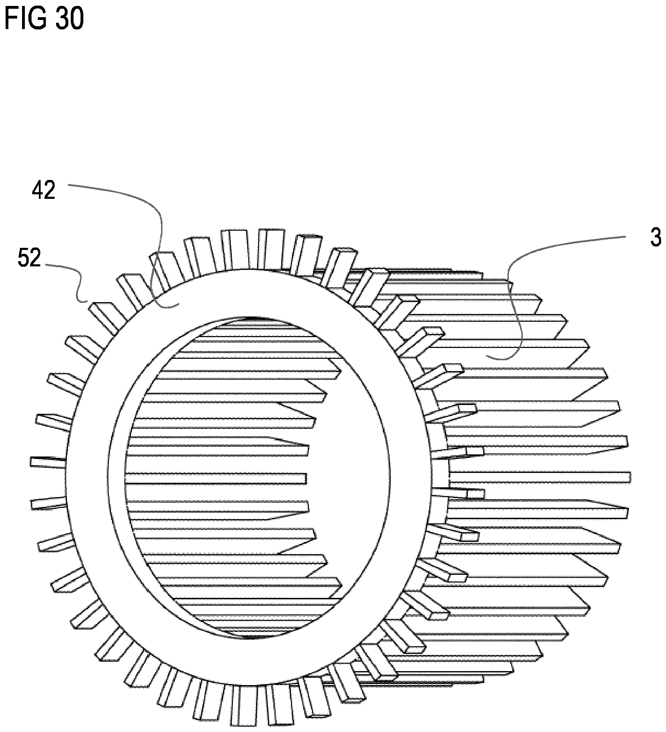

Figur 30 zeigt ein zweites Ausführungsbeispiel eines Kurzschlussrings 42 mit Kühlrippen 52. Ausgehend von dem Kurzschlussring von Figur 2 mit den sich daran anschließenden Leiterabschnitten 3 ist der Kurzschlussring 42 an seinem Außenradius mit radial nach außen verlaufenden Kühlrippen 52 versehen.

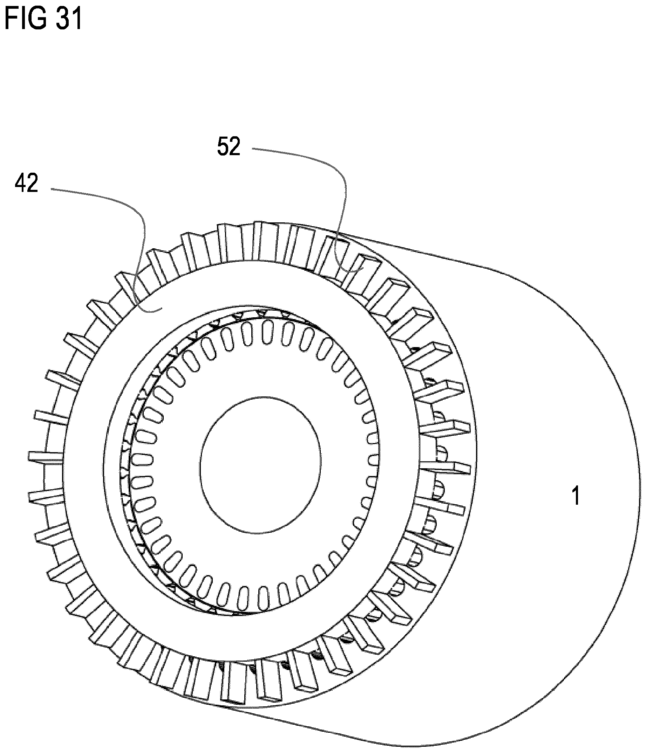

Figur 31 zeigt das Ausführungsbeispiel von Figur 30 mit Stator 1. Die Leiterabschnitte 3 sind in jeweilige Nuten des Stators 1 eingebracht. In radialer Richtung nach außen schließen die Kühlrippen 52 mit dem Außendurchmesser des Stators 1 ab. Die Kühlrippen haben hier eine flache, quaderförmige Geometrie und sind voneinander in Umfangsrichtung beabstandet.

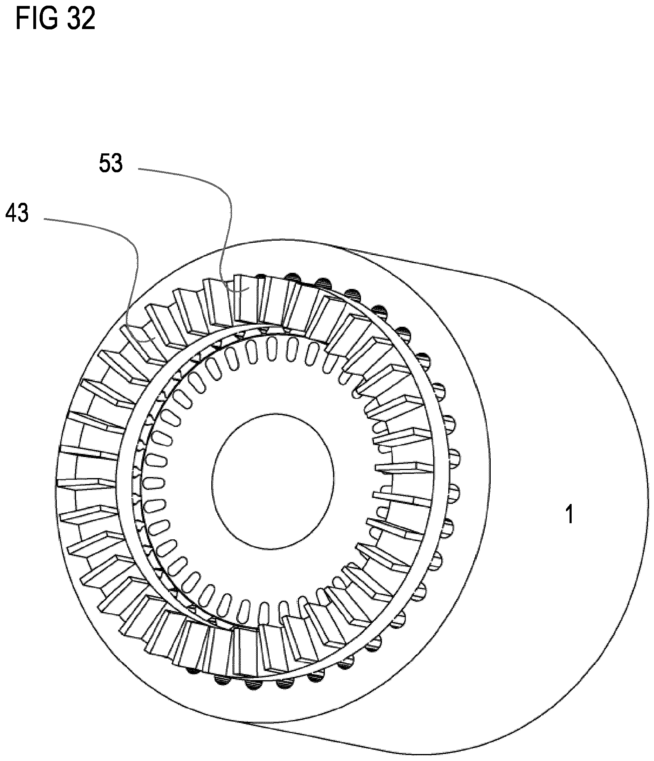

Figur 32 zeigt ein drittes Ausführungsbeispiel eines Kurzschlussrings 43 mit Kühlrippen. Ausgehend von dem Kurzschlussring von Figur 2 mit den sich daran anschließenden Leiterabschnitten 3 ist der Kurzschlussring 43 an seiner den Leiterabschnitten 3 abgewandten Stirnseite mit axial verlaufenden Kühlrippen 53 versehen, die sich von der Stirnseite des Kurzschlussrings 43 ausgehend erstrecken. Die Kühlrippen haben hier eine flache, quaderförmige Geometrie und sind voneinander in Umfangsrichtung beabstandet. Die Leiterabschnitte 3 sind in jeweilige Nuten des Stators 1 eingebracht.

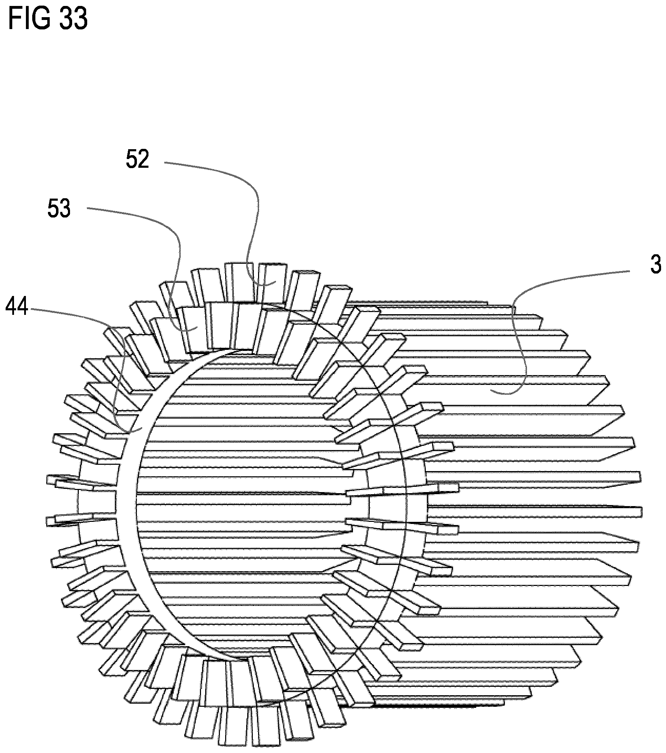

Figur 33 zeigt ein viertes Ausführungsbeispiel eines Kurzschlussrings 44 mit Kühlrippen. Ausgehend von dem Kurzschlussring von Figur 2 sind bei dem Kurzschlussring 44 die radial nach außen weisenden Kühlrippen 52 der Ausführung von Figuren 30, 31 mit den axial angeordneten Kühlrippen 53 der Ausführung von Figur 32 kombiniert. Es wird zur Vermeidung von Wiederholungen auf die dortige Beschreibung verwiesen.

Die Kühlrippen dienen der jeweils der Verbesserung der Wärmeabfuhr.

Bezugszeichenliste

| 1 | Stator |
|---|---|
| 2 | Nut |
| 3 | Leiterabschnitt |
| 3' | stranded conductor |
| 4 | Kurzschlussring |
| 5 | erste Seite |
| 6 | zweite Seite |
| 7 | Stromquelle |
| 8 | Stromversorgungseinheit |
| 9 | Schalter |
| 10 | Schalter |
| 11 | Gleichspannungsquelle |
| 12 | Gleichspannungsbus |
| 13 | Gleichspannungsbus |
| 14 | Gleichspannungsbus |
| 15 | Kommutator |
| 16 | Kohlebürste |
| 17 | Kommutator |

| 18 | Kommutator |
|----|-----------|
| 19 | Teil-Leiterabschnitt |
| 20 | Eisenbrücke |
| 21 | Rotor |
| 22 | Kurzschlussring |
| 41 | Kurzschlussring |
| 42 | Kurzschlussring |
| 43 | Kurzschlussring |
| 44 | Kurzschlussring |
| 51 | Kühlrippen |
| 52 | Kühlrippen |
| 53 | Kühlrippen |
| A1 bis A18: | Phasen der Leiterabschnitte |

**Patentansprüche**

1. Elektrische Maschine mit einem Stator (1) und einem beweglich dazu gelagerten Rotor (21), wobei:

   - der Stator (1) eine Vielzahl von Nuten (2) zur Aufnahme einer Statorwicklung umfasst,
   - je genau ein Leiterabschnitt (3) der Statorwicklung je Nut eingelegt ist,
   - die Leiterabschnitte (3) auf einer ersten Seite (5) des Stators miteinander in einem Kurzschlussmittel kurzgeschlossen sind, wobei das Kurzschlussmittel und die Leiterabschnitte (3) einstückig hergestellt sind,
   - die Leiterabschnitte auf einer der ersten Seite gegenüberliegenden zweiten Seite (6) des Stators jeweils mit einem Anschluss einer Stromversorgungseinheit (8) verbunden sind, wobei
   - die Anzahl der Phasen mindestens 4 beträgt **dadurch gekennzeichnet, dass** das Kurzschlussmittel als Kurzschlussring (41, 42, 43, 44) ausgebildet ist und Kühlrippen (51, 52, 53) aufweist.

2. Elektrische Maschine nach Anspruch 1, bei der die auf der ersten Seite (5) des Stators miteinander kurzgeschlossenen Leiterabschnitte (3) einem ersten Polpaar zugeordnet sind, und bei dem weitere Leiterabschnitte in weiteren Nuten des Stators vorgesehen sind, die einem weiteren Polpaar zugeordnet sind, die auf der zweiten Seite (6) des Stators miteinander kurzgeschlossen sind und jeder Leiterabschnitt auf der jeweils nicht kurzgeschlossenen Seite mit einem Anschluss der Stromversorgungseinheit (8) verbunden sind.

3. Elektrische Maschine nach Anspruch 1 oder 2, bei der die Leiterabschnitte (3), entweder einzeln oder in Gruppen gemeinsam angesteuerter, benachbarter Leiterabschnitte, von der Stromversorgungseinheit (8) mit einer jeweils eigenen elektrischen Phase versorgt werden, wobei die Gruppen gemeinsam angesteuerter, benachbarter Leiterabschnitte jeweils 2 oder mehr Leiterabschnitte umfassen.

4. Elektrische Maschine nach einem der Ansprüche 1 bis 3, bei der die Anzahl der Phasen mindestens 5 beträgt.

5. Elektrische Maschine nach einem der Ansprüche 1 bis 3, bei der die Anzahl der Phasen mindestens 10 beträgt.

6. Elektrische Maschine nach einem der Ansprüche 1 bis 5, bei der die jeweils in die Nuten eingelegten Leiterabschnitte (3) gerade sind.

7. Elektrische Maschine nach einem der Ansprüche 1 bis 6, bei der die jeweils in die Nuten eingelegten Leiterabschnitte (3) Aluminium-Stäbe, Kupfer-Stäbe oder Bronze-Stäbe umfassen.

8. Elektrische Maschine nach einem der Ansprüche 1 bis 7, bei der die Stromversorgungseinheit (8) dazu eingerichtet ist, die Polpaarzahl im Betrieb der Maschine zu verändern.

9. Elektrische Maschine nach einem der Ansprüche 1 bis 8,

bei der die Stromversorgungseinheit (8) dazu eingerichtet ist, zumindest einen Leiterabschnitt (3) im Betrieb zu deaktivieren.

10. Elektrische Maschine nach einem der Ansprüche 1 bis 9,
bei der die Stromversorgungseinheit (8)
Kommutierungsmittel (15, 16, 17, 18) umfasst, um verschiedene elektrische Phasen zu erzeugen und in die Leiterabschnitte (3) des Stators einzuspeisen.

11. Elektrische Maschine nach einem der Ansprüche 1 bis 10,
bei der die jeweils in die Nuten eingelegten Leiterabschnitte (3) zumindest zwei parallel geschaltete Teil-Leiterabschnitte (19) umfassen.

12. Elektrische Maschine nach Anspruch 11,
bei der Eisenbrücken (20) zwischen den parallel geschalteten Teil-Leiterabschnitten (19) ausgebildet sind.

13. Elektrische Maschine nach einem der Ansprüche 1 bis 12,
bei der die Stromversorgungseinheit (8) eine oder mehrere Gleichspannungsquellen (11) umfasst, die über elektronische Schalter (9, 10) mit den Leiterabschnitten (3) verbunden sind.

**Claims**

1. An electric machine with a stator (1) and a rotor (21) mounted movable relative to said stator, wherein:

    - the stator (1) comprises a plurality of slots (2) for receiving a stator winding,
    - exactly one conductor portion (3) of the stator winding is inserted per slot,
    - the conductor portions (3) on a first side (5) of the stator are short-circuited with one another in a short-circuiting element, wherein the short-circuiting element and the conductor portions (3) are integrally formed,
    - the conductor portions on a second side (6) of the stator opposite the first side are each connected to a terminal of a power supply unit (8), wherein
    - the number of phases is at least 4,

    **characterized in that**
    the short-circuiting element is designed as a short-circuit ring (41, 42, 43, 44) and has cooling fins (51, 52, 53).

2. The electric machine according to claim 1,
in which the conductor portions (3), which are short-circuited with one another on the first side (5) of the stator, are assigned to a first pole pair, and in which further conductor portions are provided in further slots of the stator, which are assigned to another pole pair, which are short-circuited with one another on the second side (6) of the stator and each conductor portion on the respective non-short-circuited side is connected to a terminal of the power supply unit (8).

3. The electric machine according to claim 1 or 2,
in which the conductor portions (3), either individually or in groups of commonly controlled and neighboring conductor portions, are supplied with a distinct electric phase by the power supply unit (8), wherein the groups of commonly controlled, neighboring conductor portions each comprise 2 or more conductor portions.

4. The electric machine according to one of claims 1 to 3,
in which the number of phases is at least 5.

5. The electric machine according to one of claims 1 to 3,
in which the number of phases is at least 10.

6. The electric machine according to one of claims 1 to 5,
in which the conductor portions (3) inserted into the slots are straight.

7. The electric machine according to one of claims 1 to 6,
in which the conductor portions (3) inserted in the slots comprise aluminum rods, copper rods and bronze rods.

**8.** The electric machine according to one of claims 1 to 7,
in which the power supply unit (8) is set-up to change the pole pair number during operation of the machine.

**9.** The electric machine according to one of claims 1 to 8,
in which the power supply unit (8) is set-up to deactivate at least one conductor portion (3) during operation.

**10.** The electric machine according to one of claims 1 to 9,
in which the power supply unit (8) comprises commutation elements (15, 16, 17, 18) in order to generate various electric phases and supply them to the conductor portions (3) of the stator.

**11.** The electric machine according to one of claims 1 to 10,
in which the conductor portions (3) inserted into the slots comprise at least two conductor sub-portions (19) connected in parallel.

**12.** The electric machine according to claim 11,
in which iron bridges (20) are formed between the conductor sub-portions (19) which are connected in parallel.

**13.** The electric machine according to one of claims 1 to 12,
in which the power supply unit (8) comprises one or multiple direct voltage sources (11), which are connected to the conductor portions (3) via electric switches (9, 10).

**Revendications**

**1.** Machine électrique comportant un stator (1) et un rotor (21) logé de manière mobile par rapport à celui-ci, sachant que :

- le stator (1) comprend une pluralité de rainures (2) pour le logement d'un enroulement de stator,
- exactement une partie conductrice (3) de l'enroulement de stator est respectivement insérée par rainure,
- les parties conductrices (3) sont court-circuitées les unes avec les autres dans un moyen de court-circuitage d'un premier côté (5) du stator, sachant que le moyen de court-circuitage et les parties conductrices (3) sont fabriqués d'une seule pièce,
- les parties conductrices sont reliées respectivement à une connexion d'une unité d'alimentation en courant (8) d'un deuxième côté (6) opposé au premier côté, sachant que
- le nombre des phases est d'au moins 4, **caractérisé en ce que** le moyen de court-circuitage est constitué comme anneau de court-circuitage (41, 42, 43, 44) et présente des nervures de refroidissement (51, 52, 53).

**2.** Machine électrique selon la revendication 1,
dans laquelle les parties conductrices (3) court-circuitées les unes avec les autres du premier côté (5) du stator sont associées à une première paire de pôles, et dans laquelle des parties conductrices supplémentaires sont prévues dans des rainures supplémentaires du stator, qui sont associées à une paire de pôles supplémentaire, qui sont court-circuitées les unes avec les autres du deuxième côté (6) du stator, et chaque partie conductrice est reliée à une connexion de l'unité d'alimentation en courant (8) du côté respectivement non court-circuité.

**3.** Machine électrique selon la revendication 1 ou 2,
dans laquelle les parties conductrices (3), soit individuellement soit en groupes de parties conductrices adjacentes excitées conjointement, sont alimentées par l'unité d'alimentation en courant (8) avec une phase électrique qui leur est respectivement propre, sachant que les groupes de parties conductrices adjacentes excitées conjointement comprennent respectivement 2 parties conductrices ou plus.

**4.** Machine électrique selon l'une des revendications 1 à 3,
dans laquelle le nombre des phases est d'au moins 5.

**5.** Machine électrique selon l'une des revendications 1 à 3,
dans laquelle le nombre des phases est d'au moins 10.

**6.** Machine électrique selon l'une des revendications 1 à 5,
dans laquelle les parties conductrices (3) insérées respectivement dans les rainures sont droites.

**7.** Machine électrique selon l'une des revendications 1 à 6,
dans laquelle les parties conductrices (3) insérées respectivement dans les rainures comprennent des barres d'aluminium, des barres de cuivre ou des barres de bronze.

**8.** Machine électrique selon l'une des revendications 1 à 7,
dans laquelle l'unité d'alimentation en courant (8) est configurée pour modifier le nombre de paires de pôles en fonctionnement de la machine.

**9.** Machine électrique selon l'une des revendications 1 à 8,
dans laquelle l'unité d'alimentation en courant (8) est configurée pour désactiver au moins une partie conductrice (3) en fonctionnement.

**10.** Machine électrique selon l'une des revendications 1 à 9,
dans laquelle l'unité d'alimentation en courant (8) comprend des moyens de commutation (15, 16, 17, 18) pour générer diverses phases électriques et les injecter dans les parties conductrices (3) du stator.

**11.** Machine électrique selon l'une des revendications 1 à 10,
dans laquelle les parties conductrices (3) insérées respectivement dans les rainures comprennent au moins deux parties conductrices partielles (19) connectées en parallèle.

**12.** Machine électrique selon la revendication 11,
dans laquelle des pontages de fer (20) sont constitués entre les parties conductrices partielles (19) connectées en parallèle.

**13.** Machine électrique selon l'une des revendications 1 à 12,
dans laquelle l'unité d'alimentation en courant (8) comprend une ou plusieurs sources de courant continu (11) qui sont reliées aux parties conductrices (3) via des commutateurs électroniques (9, 10).

FIG 1

FIG 2

4

5

6

FIG 3

4

3

| A1 | A2 | A3 | A4 | A5 | A6 | A7 | A8 | A9 | A10 | A11 | A12 | A13 | A14 | A15 | A16 | A17 | A18 |

7

8

## FIG 4

## FIG 5

FIG 6

FIG 7

FIG 8

FIG 9

A1 A2 A3 A4 A5 A6 A7 A8 A9 A10 A11 A12 A13 A14 A15 A16 A17 A18

FIG 10

FIG 11

A1 A2 A3 A4 A5 A6 A7 A8 A9 A10 A11 A12 A13 A14 A15 A16 A17 A18

## FIG 12

A1 A2 A3 A4 A5 A6 A7 A8 A9 A10 A11 A12 A13 A14 A15 A16 A17 A18

9

13    14

11    11

$+$
$-$

## FIG 13

A1 A2 A3 A4 A5 A6 A7 A8 A9 A10 A11 A12 A13 A14 A15 A16 A17 A18

15

16    16

16    18

$+$    $-$

$\omega_R$

15

# FIG 14A

# FIG 14B

FIG 15A

FIG 15B

18

16

17

16

FIG 15C

FIG 16

FIG 17

FIG 18A

FIG 18B

## FIG 19A

## FIG 19B

## FIG 19C

FIG 20A

FIG 20B

FIG 20C

FIG 20D

FIG 21

## FIG 22A

## FIG 22B

FIG 23

FIG 24

FIG 25

FIG 26

FIG 27

FIG 28

41

51

3

FIG 29

51    41

1

FIG 30

42

52

3

FIG 31

52

42

1

FIG 32

53

43

1

FIG 33